# EUROPEAN PATENT SPECIFICATION

(11) **EP 3 569 907 B1**
(45) Date of publication and mention of the grant of the patent: **07.10.2020**
(21) Application number: 18172302.4
(22) Date of filing: 15.05.2018
(51) Int. Cl.: F16L 5/04, A62C 3/16, H02G 3/22

(54) **PENETRATION DEVICE**
PENETRATIONSVORRICHTUNG
DISPOSITIF DE PÉNÉTRATION

(43) Date of publication of application: 20.11.2019
(73) Proprietor: Oy FCR Finland Ltd, 21270 Nousiainen (FI)
(72) Inventor: NOUSIAINEN, Ari, 21530 PAIMIO (FI)
(74) Representative: Berggren Oy, Turku

(56) References cited:
- WO-A1-2013/160776
- US-A- 4 894 966

## Description

### Field of the invention

The present invention relates to a penetration device for cable(s), wire(s) or pipe(s) that pass through an opening arranged to a wall, a ceiling or a floor according to the preamble of the independent claim presented below.

### Background of the invention

During the construction work, it is necessary to provide openings or passages through the walls, ceilings and/or floors to permit the running of various type of cables, wires and/or pipes throughout a building, a ship or the like. Such openings, however, provide one mechanism by which fire and smoke may spread from one room or compartment to another. Especially when cables, wires and/or pipes must pass through fire-resistance-rated constructions such as fire-walls or intermediate floor structures, firestop penetration systems are used to ensure that the rating of construction is maintained.

Penetration firestopping systems are a passive means of fire protection. There is no movement or activation required. These passive systems are mainly used to compartmentalize a fire and keep it from spreading for a period long enough determined in the fire zone requirements. For example, the penetration devices with temperature expansible intumescent material are used for the purpose of protecting cables, wires and/or pipes routed through the walls, ceilings or floors from fire and also to prevent spreading of fire through the openings for the cables, wires and/or pipes.

In known firestopping penetration devices or sealing systems, a layer of intumescent material is arranged, such as wrapped or prefoamed around the cable, wire or pipe that passes through an opening in a wall, a ceiling, a floor or the like in a substantially whole length of the penetration device. Alternatively, the intumescent material has formed from multiple pieces arranged around the cable, wire or pipe. The firestopping penetration devices or sealing systems may also be made as a sole intumescent material. The documents WO 2013/160776 and US 4 894 966 disclose firestopping penetration devices known in the art. In the event of fire, the intumescent material swells up due to the heat and closed the opening that fire and dangerous combustion products cannot spread to other room or compartment through the opening and maintain the integrity of the wall, ceiling or floor in which the penetration device has installed. Typically, the intumescent material arranged around a cable, a wire or a pipe is adapted to reach the gap between a cable, a wire or a pipe and the surrounded opening, or the sealing system comprises a separate sealing device to close the gap. In penetration devices for multiple cables, each of the cables requires own installation work for intumescent material prior to arranging inside the opening and/or the housing, which makes these penetration devices or sealing systems laborious to use. Also, together with above mentioned penetration devices or sealing systems some chemical substances as adhesives are used, or they further need a separate mechanical fastening to the penetration opening. The installation work of the known penetration devices requires fairly sophisticated installation procedures that must be followed exactly if the penetration device is expected to act as designed and, in some cases, there is not possible to confirm the competent installation. Typically, intumescent material or fire barrier sealant is arranged, or even cast, to the opening during installation work, wherein the installation work may become more time-consuming.

Therefore, there is a constant need for the reliable and cost-effective firestop penetration devices and sealing systems which are easy to install and fulfils fire resistance requirements. Further, it is desirable that the penetration device or the sealing system provides easy inspection of the competent installation by visually.

### Summary of the Invention

It is an object of the present invention to reduce or even eliminate the above-mentioned problems appearing in prior art.

The object of the invention is to provide a simply designed, easy to use and cost-effectively producible fire-resistance-rated penetration device for at least one cable, wire, pipe or the like that pass through an opening of a wall, a ceiling or a floor.

It is especially an object of the present invention to provide a firestop penetration device and a gas-tight sealing system for preventing the spread of dangerous combustion products and fire through an opening arranged to the wall, ceiling or floor for cable(s), wire(s) or pipe(s) and sealing the penetration opening and finally closing the penetration opening in the fire-rated surface when the penetrating cable(s), wire(s) or pipe(s) burns away.

Further, it is an object to provide a penetration device which enable easy inspection of the competent installation.

In order to achieve among others the objects presented above, the invention is characterized by what is presented in the characterizing parts of the enclosed independent claims.

Some preferred embodiments of the invention will be described in the other claims.

A penetration device according to the present invention for cable(s), wire(s) or pipe(s) that pass through an opening arranged to a wall, a ceiling or a floor comprises
- an insert, which comprises an intumescent material and heat resistant flexible material layers, wherein the intumescent material has arranged between the heat resistant flexible material layers, the insert comprises at least one opening for a cable, a wire or a pipe elongated through the width direction of the insert, and
- a housing, which comprises an outer casing surrounding the insert, which outer casing is at least partly perforated, and the outer casing comprises a first end and a second end in the length direction of the housing, which first end and second end comprise inward bent edges and/or a structural element to make an area of the opening of the first end and the second end smaller.

A typical sealing system used in the present invention for cable(s), wire(s) or pipe(s) that pass through an opening arranged to a wall, a ceiling or a floor comprises
- at least two heat resistant flexible material layers,
- an intumescent material, and
- a housing, which comprises an outer casing having a first end and a second end in the length direction of the housing, which first end and second end comprise inward bent edges and/or a structural element to make an area of the opening of the first end and the second end smaller, and the outer casing is at least partly perforated.

A penetration device according to the present invention is suitable for one cable, wire or pipe, but it can also be used for multicable management, i.e. the firestop penetration device according to the present invention may be used to one, two, three, four or more cables, wires or pipes arranged to pass through the same penetration device. The number of the cables, wires or pipes has not limited. The penetration device according to the present invention for multiple cables, wires or pipes comprises one insert through which all cables, wires or pipes are arranged to penetrate, which makes installation work easy. A penetration device according to the present invention is applicable to be used with any kind of cables, wires, pipes, conduits or the like, or any combination of them.

A penetration device according to the invention may be constructed from the components of the sealing system. The embodiments and advantages mentioned in this text relate, where applicable, both to the penetration device, the sealing system as well as to the uses according to the invention, even though it is not always specifically mentioned.

A firestop penetration device according to the present invention is based on the combination of the perforated outer casing of the housing and the insert arranged inside the housing providing possibility to manufacture penetration devices according to required fire classes with improved fire stopping properties. The insert according to the present invention comprises temperature expansible intumescent material and at least two heat resistant flexible material layers, preferably heat resistant silicone rubber layers. The intumescent material has arranged between the heat resistant flexible material layers inside the housing. The heat resistant flexible material layers have dimensioned in such a manner that they arrange tightly against the inner surface of the outer casing and so also in the event of fire, the tightness of the insert is maintained, since the heat resistant flexible material layers arranged on both side of the intumescent material remains firm until the intumescent material in the centre of the insert begins to expand from influence of heat. The insert structure according to the present invention keeps the structure tight also as the fire continues. In fire, the intumescent material arranged between the heat resistant flexible material layers expands and discharges in a controlled manner firstly through the perforation in the outer casing of the housing and then mainly towards the fire and so tightening the housing structure and the whole penetration opening. Further, the uncontrollable expansion of the intumescent material may be prevented in the event of fire, since an area of the opening of the open-ended first end and the open-ended second end of the outer casing has been made smaller, wherein the expansion of the intumescent material can be controllable guided through the openings of the ends.

The firestop penetration device according to the present invention is a passive device for fire protection. Firestop penetration devices are used to ensure compartmentalization and these kind of firestop products play an important role in the overall fire safety design. The role of compartmentalization is especially critical in marine applications, such as ships etc., vehicles such as trains, trams or the like, but also in large buildings, such as e.g. powerplants, public buildings, hospitals and healthcare facilities. Especially in marine industry, but also in other fields, there are specific requirements for the fire-resistance-rated penetration devices, especially requirements for tightness against gas and liquid pressure. This usually makes the solutions more complicated and expensive, as well as installation more challenging. The penetration device and the sealing system according to the present invention provide cost-effective and easy to use solution for used in applications requiring fire rated penetrations for cable(s), wire(s) or pipe(s). The penetration device and the sealing system according to the present invention can be used in all kind of applications. According to an embodiment, the penetration device and the sealing system may be utilized in shipbuilding industry in new buildings, but they fit well also in refurbishment projects.

Cost effective structure of the penetration device and the sealing system according to the invention, including both the inserts and the housing, fits well to mass production, and the dimensions of the housings and the inserts may be easily scaled in different sizes. A height and an exterior size of the outer casing may be varied to the size and the number of the cables, wires or cables.

The present invention provides a compact structure for the penetration device. Typically, the outer casing has a low structural height in the length direction on the outer casing, i.e. in the installation direction of the penetration device, which also corresponds the longitudinal direction of the cable(s), wire(s) or pipe(s) arranged through the device. The low structural height provides benefits for fire classified structures since regardless of the thickness of the fire rated structure, the penetration device operates in fire conditions according to the fire classification tested by the penetration device. This is beneficial especially in vehicles or marine applications wherein the walls are typically substantially slim and the penetration devices are typically arranged inside the wall structures.

The present invention provides easy installation, since the penetration device is a cartridge-type device with a self-supporting housing and when installed, the structure provides flexible support for the pipe, cable or wire to be penetrated. The penetration device according to the invention may also function as a cable gland. The penetration device and the sealing system of the invention may be easily attached to all types of structures.

A penetration device according to the present invention may be arranged to any structure which comprises an opening for cable(s), wire(s) and/or pipe(s) and in which fire-resistance-rated constructions are required. A structure may be a wall, a ceiling, a floor or the like. In this description, the structure to which a penetration device has arranged relates all possible structures in all cases, even though it is not always specifically mentioned.

### Short Description of the drawings

The invention will be described in more detail with reference to appended drawings, in which
- Fig. 1: presents a structure of the penetration device according to an embodiment of the invention,
- Fig. 2: presents a penetration device according to an embodiment of the invention as sectional drawing,
- Fig. 3: presents a structure of an intumescent material sheet and a heat resistant flexible material layer according to an embodiment of the invention, and
- Fig. 4: shows a penetration device according to an embodiment of the invention viewed in front of the device.

### Detailed description of the invention

A penetration device according to the invention comprise a housing and an insert to be arrangeable inside the housing. A housing of the penetration device according to the present invention comprises an outer casing surrounding the insert. An outer casing of the housing comprises an unclosed first end and an unclosed second end in the length direction of the housing, wherein the outer casing is a hollow sleeve. Therefore, the outer casing of the housing comprises a cavity in the length direction of the housing. A length direction of the housing and the outer casing refers to the length in the longitudinal direction of the mounting line, i.e. a length of the outer casing in the installation direction. The cable(s), wire(s) or pipe(s) are arranged to go through the outer casing in the length direction of the outer casing. The outer casing may be a straight cylinder in the installation direction, or it may be slightly tapering in the installation direction which may improve tightness of the penetration device.

According to the invention, an outer casing is at least partly perforated by arranging openings to a material of the outer casing. The perforation of the outer casing guarantees that in the event of fire the intumescent material may firstly expand through the openings of the outer casing and tightening the structure of the penetration device. According to one preferred embodiment of the invention the outer casing comprises openings substantially in the whole circumference of the outer casing. The size, the number and the location of the openings in the outer casing may be varied depending on e.g. the size of the penetration device.

Further, the outer casing has been formed so that the first end and the second end comprise inward bent edges and/or at least one structural element to make an area of the opening of the first end and the second end smaller. The structural element may be a single structural element, or it may comprise two or more separate components. Since the area of the opening of the first end and the second end has been made smaller, the uncontrollable expansion of the intumescent material may be prevented in the event of fire, wherein the expansion of the intumescent material can be guided through the openings in a controlled manner. According to an embodiment of the invention, the first end and the second end of the outer casing comprise the inward bent edges, such as a shoulder, and/or a separate plate having an opening arranged to the first end and second end of the outer casing to make an area of the openings smaller. In an embodiment of the invention, the inward bent edges and/or the structural element(s) have arranged at the edge of the first end and the second end by covering at least 50 % length of the outer perimeter of the end, preferably the inward bent edges and/or the structural element(s) have arranged to the whole length of the outer perimeter of the end. Therefore, the area of the opening of the first end and the second end of the outer casing have preferably decreased from the outer edges of the opening towards the centre of the opening by providing expansion of the intumescent material in a controlled manner in the event of fire.

According to an embodiment of the invention, a first end of the outer casing is the end which is the first in the assembly direction of the penetration device when installing the device, and the second end is the end which is the second in the assembly direction of the penetration device. According to a preferred embodiment of the invention, the outer casing comprises inward bent edges, such as a shoulder, arranged to the first end of the outer casing. By this structure, the insert can also be tightly assembled inside the outer casing and the moving of the insert during installation work can be eliminated. According to a preferred embodiment of the invention, the second end of the outer casing comprises a structural element, such as a separate plate having an opening, arranged in connection with the second end of the outer casing. Typically, a separate plate having an opening arranged to the second end of the outer casing is a separate cover plate of the penetration device.

The housing of the penetration device may also comprise a fixing flange at the second end of the outer casing, which provides a structure for attaching the penetration device to the wall, ceiling or floor. According to an embodiment of the invention a separate cover plate having an opening has arranged in connection to the fixing flange. Typically, the cover plate and the fixing flange are attached to the wall, ceiling or floor comprising an opening to which the penetration device has arranged. In one preferred embodiment of the invention, the inner diameter of the opening of the cover plate is smaller than the diameter of the insert, which allows in case of fire that the intumescent material will expand in a controlled way. The opening in the cover plate may also be open in one edge of the cover plate by allowing easy assembly around the cables, wires or pipes.

A housing of the penetration device may be a one-piece housing, or it may be split in two or more pieces. According to an embodiment of the invention, the housing is constructed from two or more interconnected parts, wherein it provides openable structure and it can be easily assembled. According to a preferred embodiment of the invention, the housing is constructed from two interconnected parts, wherein two parts of the housing may be hinged structure, or they are otherwise attachable to each other.

The housing of the penetration device may be manufactured from any suitable material. The suitable material is selected on the basis of the required structural strength. The housing may be made of e.g. steel, stainless steel, aluminium, iron, heat-resistant plastic or composite material. In a typical embodiment of the invention, the fixing flange is the fixed part of the outer casing. Whereas, the cover plate is typically a separate part attached in connection with the fixing flange during installation work. The outer casing and the cover plate may be manufactured from same or different materials. The thickness of the outer casing may also vary depending on the required properties. In some embodiments, the thickness of the outer casing may be e.g. 0.5 - 3 mm. The outer diameter of the outer casing is preferably dimensioned to be fitted to the penetration opening, to which is arranged.

According to an embodiment of the invention the penetration device comprises a heat-resistant gasket between the cover plate and the fixing flange of the housing. The gasket has also an opening so that the insert remains visible in the opening. The gasket may be made of any suitable material. In an embodiment according to the invention, the combination of the cover plate and the gasket forms the structural element which has arranged to the second end of the outer casing and delimits the area of the opening of the second end.

An insert has arranged inside the hollow outer casing of the penetration device according to the present invention. The insert comprises an intumescent material and the heat resistant flexible material layers. The intumescent material has arranged between the heat resistant flexible material layers. The heat resistant flexible material is dimensioned in such a way that it tightens the structure at normal conditions, whereas the expansion of the intumescent material starts in the event of fire. The insert comprises at least one opening elongated through the width direction of the insert for a cable, a wire or a pipe. A width direction of the insert is a total width of one on the other layers of the insert. Typically, the width of the insert has dimensioned so that it fulfils the entire cavity of the outer casing. A width direction of the insert corresponds to the length direction of the outer casing, wherein the layers of the insert have arranged perpendicularly with respect to the length direction of the outer casing. According to an embodiment of the invention, the insert is dimensioned so that the width of the insert is slightly bigger, e.g. 2 - 5 mm, than the length of the outer casing, wherein the insert is in compressed state when arranged inside outer casing by providing tight structure also in the length direction of the outer casing.

The intumescent material and the heat resistant flexible material layers of the insert are designed to withstand fire and heat according to required fire classes. Typically, the materials used in the insert may provide e.g. half-hour or hourly fire-resistance ratings. The perforated outer casing of the housing in combination with the insert provides the desired fire-resistance-rated construction by modifying the materials of the insert. In a preferred embodiment, the intumescent material is in the form of a sheet, which is arranged between the heat resistant flexible material layers. The intumescent material may comprise one, two or more layers of the intumescent sheet material. The intumescent material to be arranged between the heat resistant flexible material layers may also be in any other applicable form. The intumescent material may be any suitable temperature expansible (heat expansible) intumescent material. A temperature expansible intumescent material refers to the material that expands when exposed to heat. Typically, the expansion of the intumescent material may start about at 150 - 400 °C depending on the composition of the intumescent material. In some embodiments, the intumescent material expands about 5 - 30 times of the width of the intumescent material layer in room temperature. The layers of the intumescent material and the heat resistant flexible material have arranged around the cable(s), wires(s) or pipes(s) substantially perpendicularly with respect to the length direction of the cable(s), wires(s) or pipe(s). In the present invention, the intumescent material has not arranged in the whole length of the penetration device, but the insert comprises only a thin layer of the intumescent material arranged substantially perpendicularly with respect to the length direction of the cable(s), wires(s) or pipe(s). The construction of the insert can be easily adjusted on the basis of the required properties by changing the intumescent material and/or varying the thickness and/or the number of the intumescent material layers. In some embodiments, it is possible to combine two or more different intumescent material layers easily to same insert construction.

According to the present invention the heat resistant flexible material layers may be formed from any suitable heat resistant material, which burn in a controlled way and/or gasify in the event of fire. The suitable material may be selected on the basis of required fire rating, but the heat load of the penetrating cable, wire or pipe may also be affect to the selection of the materials. The heat resistant flexible material layers are preferably made of material, which may be resistant to temperature even up to 450 °C, which means that it maintains its stability up to said temperature. Typically, the heat resistance flexible material layers are formed from material having temperature resistant at 150 - 450 °C. In an embodiment, the durometer shore A hardness of the heat resistant flexible material may be in the range of 10 - 50 according to ASTM D2240 testing standard. According to an embodiment of the invention, the heat resistant flexible material layers comprise silicone or silicone rubber. In a preferred embodiment of the invention, the heat resistant flexible material layers are made of silicone or silicone rubber wherein the layers have formed from the silicone or silicone rubber sheet, or they are casted in the desired form. In an embodiment, the silicone rubber layers are made of heat resistant silicone rubber. The heat resistant silicone or silicone rubber may be resistant to temperature even up to 450 °C or in the range of 150 - 450 °C. In an embodiment, the heat resistant flexible material may be made of PU -based materials having required properties. The heat resistant flexible material layers, such as silicone rubber layers or the like improve the controlled function of the insert in the fire. The heat resistant flexible material layers provide time to intumescent material for firstly expand through the openings in the outer casing of the housing and tightening the structure of the housing. The properties of the insert may be varied by altering the thickness of the heat resistant flexible material layers and/or selection of material to be used. The layer may also be formed on two or more layers connected to each other. According to an embodiment of the invention, the thickness of the heat resistant flexible material layer may be 0.5 - 10 mm or 0.5 - 5 mm.

The insert structure according to the invention provides an easy assembly of the layers of the insert inside the outer casing since the layers of the insert are substantially perpendicularly with respect to the length direction of the cable(s), wires(s) or pipe(s). Multiple cables, wires or pipes may be arranged through the same insert, wherein the intumescent material of the insert is arranged substantially perpendicularly with respect to all cables, wires or pipes arranged through the insert. There is no need to arrange separate intumescent material layers around each cable, wire or pipe, but the insert structure according to the invention provides easy installation method.

According to a preferred embodiment of the invention, the heat resistant flexible material layers and the intumescent material form an insert arrangeable inside the housing, wherein the insert comprises two separate part, each of the part comprises at least one sheet of intumescent material and at least one heat resistant flexible material layer attached to the sheet of intumescent material. In addition, according to an embodiment of the invention the heat resistant flexible material layers have colour that differentiate from the colour of the intumescent material. This provides an easy inspection of the competent installation of the penetration device. In an embodiment, the heat resistant flexible material layers, such as silicone rubber layers are visible at the opening of the cover plate after the installation work and the competent installation can be visually inspected. When using ready-made parts of the insert comprising the intumescent material and the heat resistant flexible layer attached to each other, the inspection of the installation is quick and easy by checking the correct colour visible at the opening of the penetration device.

If necessary, tightness of the penetration device according to the invention may be improved by arranging a sealant to the construction during the assembly work. Any suitable heat resistant sealant may be used.

In one preferred embodiment according to the present invention, the outer casing of the penetration device has a cylindrical shape, and the intumescent material sheet(s) and heat resistant flexible material layers have a circular shape.

An insert comprises at least one penetration opening elongated through the width direction of the insert for a cable, a wire or a pipe. The number of the penetration openings elongated through the width direction of the insert for cables, wires or pipes may vary. The penetration openings may be dimensioned to be matched to the outer diameter of the cable(s), wire(s) and pipe(s). According to an embodiment of the invention, the material sheets of the insert further comprise a cutting arranged between the penetration opening and the outer edge of the sheet and so they can be easily installed around the cable, wire or pipe, also in refurbishment projects. According to one preferred embodiment of the invention the intumescent material sheet(s) and the heat resistant flexible material layers comprise a cutting arranged between the penetration opening and the outer edge of the sheet/layer, which cutting is arranged tangentially or otherwise asymmetrically in relation to the opening. The insert according to the invention comprises multiple layers and the tangentially arranged cuttings provide the tight structure of the insert since the cuttings of the different layers are positioned to different points.

In preferred embodiment according to the invention, the heat resistant flexible material layers, such as silicone rubber layers are dimensioned so that they arranged tightly against the inner surface of the outer casing. In an embodiment of the present invention, the outer diameter of the heat resistant flexible material layers is greater that the outer diameter of the intumescent material sheets and/or greater than the inner diameter of the outer casing. Therefore, the heat resistant flexible material layers are at compressed state inside the outer casing. Further, the penetration openings in the heat resistant flexible material layers are preferably dimensioned so that the penetrating cable(s), wire(s) or pipe(s) are pressed by the heat resistant flexible material when arranged through the layers. Whereas the penetrating openings in the intumescent material are preferably dimensioned so that they do not hinder the installation of cable(s), wire(s) or pipe(s), i.e. the penetrating openings in the intumescent material may be larger as the diameter of penetrating cable(s), wire(s) or pipe(s). Therefore, the heat resistant flexible material seals the structure during the assembly and the dimensioning of the openings in the intumescent material layer is not so critical.

The penetration device according to the invention is assembled by arranging it to the opening in a wall, a ceiling or a floor. Typically, a penetration device according to the present invention is fitted to the opening in the construction, such as a wall, at the time of construction of the wall. A cable, a wire or a pipe is provided in an opening and they are arranged to go through the insert of penetration device according to the invention and the housing of the penetration device is arranged around the insert. A penetration device according to the invention can be used in conjunction with new constructions, but it can also be utilized during refurbishment. A penetration device according to the present invention assures that also the existing structures can be brought up to fire protection requirements. According to an embodiment, the penetration device of the present invention allows for a housing to be split in a half and so to be provided around cables, wires or pipes already laid up through an opening in the construction.

According to the invention, the cable(s), wire(s) or pipe(s) are typically arranged to go straight through the penetration device. However, alignment of the cable, wire or pipe is not crucial since the intumescent material will expand in the event of fire. The structure of the penetration device according to the present invention does not require that the cable, wire or pipe has to be centred in the intumescent material.

A penetration device according to the invention may be arranged at one or both sides of the wall, ceiling or floor. A penetration device arranged to one side of the structure is typically enough in thin structures, if the fire rating permits it. In thicker structures, a penetration device according to the invention can be arranged on both sides of the structure, and if required the space between two penetration devices can be separately tunnelled. The tunnelling can be carried out by simple tube or pipe arranged through the entire fire-rated structure between the penetration devices, wherein the penetration devices are placed at both ends of the tube or pipe.

A penetration device of the present invention can be attached to a wall, a ceiling or a floor by using any suitable fixing means such screws or the like. A sealing mass can also be used, if required. It is also possible that the fixing flange of the housing is welded to a wall, a ceiling or a floor. A fixing mechanism may also be any kind of an adapter attached to a surface of the wall, ceiling or floor and the housing of the penetration device comprises means applicable to the fixing with the adapter.

According to an embodiment of the invention, the penetration device may comprise multiple housings arranged next to each other, or inside the one housing may be arranged multiple inserts next to each other for providing multi-cable arrangement.

### Detailed description of the Figures

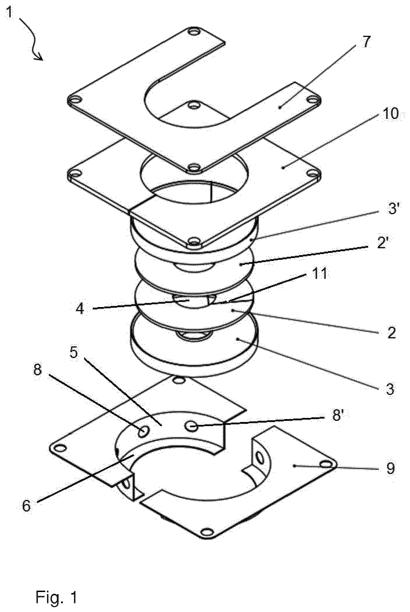

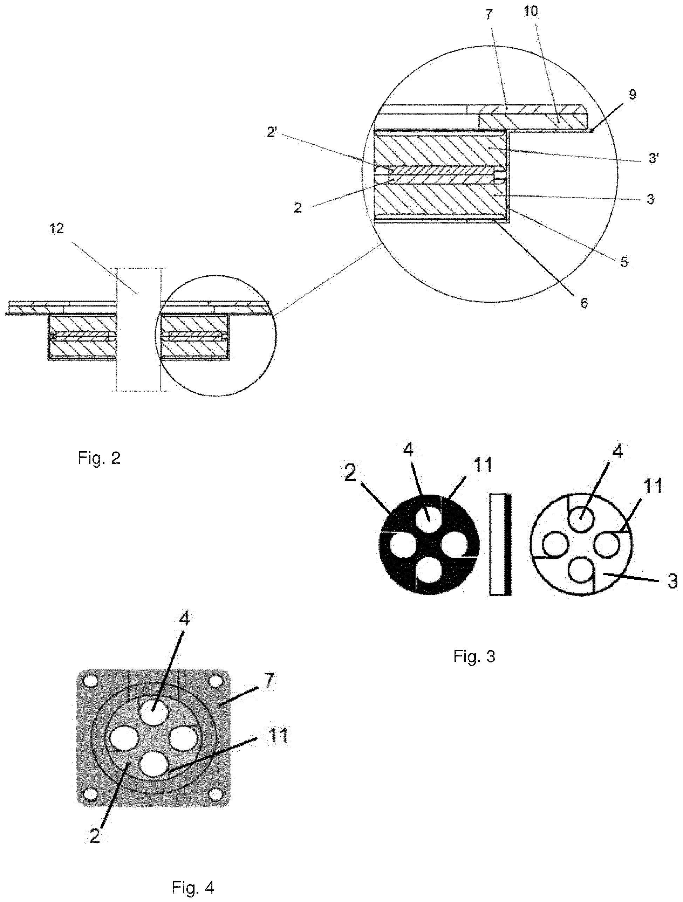

A structure of the penetration device according to an embodiment of the invention is illustrated in Figure 1. Figure 2 presents a structure of the penetration device according to an embodiment of the invention as sectional drawing. Same reference numbers have been used in the Figures for parts corresponding to each other.

A penetration device 1 according to the invention for cable(s), wire(s) or pipe(s) that pass through an opening arranged to a wall, ceiling or floor comprises an insert and a housing. An insert is formed on an intumescent material and heat flexible material layers. In an embodiment presented in Figure 1, an insert comprises the intumescent material sheets 2, 2' and the heat resistant flexible material layers 3, 3', wherein the intumescent material has arranged between the heat resistant flexible material layers 3, 3'. The layers of the insert comprise at least one penetrating opening 4 for a cable, a wire or a pipe, the opening 4 has arranged to elongate through the width direction of the insert. The width of the insert is the total width of the intumescent material and the heat resistant flexible layers. Further, the penetration device comprises a housing, which comprises an outer casing 5 surrounding the insert. The outer casing 5 has a first end and a second end in the length direction of the housing. The length direction of the housing corresponds with the width direction of the insert. The outer casing has formed in such a way that an area of the opening of the first end and the second end has made smaller. In the embodiments presented in Figure 1 and 2, a shoulder 6 has been arranged at the first end of the outer casing and a separate cover plate 7 has been arranged at the second end of the outer casing for delimiting an area of the openings. The inner diameter of the opening in the cover plate 7 is smaller than the inner diameter of the outer casing 5. Correspondingly, the opening at the first end of the outer casing is smaller than the inner diameter of the outer casing. Further, the outer casing 5 is at least partly perforated by arranging openings 8, 8' to a material of the outer casing. As shown in Figure 1, the outer casing 5 preferably comprises openings 8, 8' substantially in the whole circumference of the outer casing.

The housing of the penetration device comprises also a fixing flange 9 at the second end of the outer casing and a cover plate 7 is arranged in contact with the fixing flange 9 of the outer casing. The device may further comprise a gasket 10 between the cover plate 7 and the fixing flange 9. The combination of the cover plate 7 and the gasket 10 delimits the area of the opening of the second end. A penetration device can be attached to a wall, a ceiling or a floor by using any suitable fixing means such screws or the like. In Figure 1, the fixing flange 9, the cover plate 7 and the gasket 10 comprise ready-made openings for the fixing means for facilitating the assembly work.

The housing of the penetration device 1 may be formed from two interconnected part as shown in Figure 1.

The cross section presented in Figure 2 shows that the outer diameter of the heat resistant flexible material layers 3, 3' is greater than the outer diameter of the intumescent material sheet(s) 2, 2', wherein the heat resistant flexible material layers tighten the structure by pressing against the inner surface of the outer casing 5. From Figure 2 can also be seen that the diameter of the opening of the first end and the second end have arranged to be smaller as the inner diameter of the outer casing. The first end comprises a shoulder 6 and the second end comprises a cover plate 7 for delimiting an area of the opening.

Figure 3 presents a structure of an intumescent material sheet 2 and a heat resistant flexible material layer 3 according to an embodiment of the invention. In Figure 3, a heat resistant flexible material layer 3 and an intumescent material sheet 2 have attached to each other. According to an embodiment of the invention, the insert arrangeable inside to the housing comprises two separate part, each of the part comprises at least one sheet of intumescent material and at least one heat resistant flexible material layer attached to the sheet of intumescent material. The intumescent material and the heat flexible material layer of the insert comprise at least one penetrating opening 4 elongated through the width direction of the insert and a cutting 11 arranged between the penetration opening and the outer edge of the sheet materials of the insert. In an embodiment according to the invention, the cutting 11 is arranged tangentially or otherwise asymmetrically in relation to the opening 4.

Figure 4 presents a penetration device according to an embodiment of the invention viewed in front of the device. The heat resistant flexible material layer 2 is visible in the opening of the cover plate 7 after the installation work.

## Claims

1. A penetration device (1) for cable(s), wire(s) or pipe(s) that pass through an opening arranged to a wall, a ceiling or a floor, **characterized in that** the penetration device (1) comprises
- an insert, which comprises an intumescent material (2, 2') and heat resistant flexible material layers (3, 3'), wherein the intumescent material has arranged between the heat resistant flexible material layers, the insert comprises at least one penetrating opening (4) for a cable, a wire or a pipe elongated through the width direction of the insert, and
- a housing, which comprises an outer casing (5) surrounding the insert, which outer casing (5) is at least partly perforated, and the outer casing (5) comprises a first end and a second end in the length direction of the housing, which first end and second end comprise inward bent edges (6) and/or a structural element (7, 10) to make an area of the opening of the first end and the second end smaller.

2. The penetration device according to claim 1, **characterised in that** the intumescent material (2, 2') and the heat resistant flexible material layers (3, 3') have arranged substantially perpendicularly with respect to the length direction of the cable(s), wires(s) or pipe(s).

3. The penetration device according to claim 1 or 2, **characterised in that** the outer casing (5) comprises openings (8, 8') substantially in the whole circumference of the outer casing.

4. The penetration device according to any of the preceding claims, **characterised in that** the intumescent material (2, 2') is in a form of a sheet.

5. The penetration device according to any of the preceding claims, **characterised in that** the heat resistant flexible material layers (3, 3') have formed from the silicone or silicone rubber.

6. The penetration device according to any of the preceding claims, **characterised in that** the housing comprises a fixing flange (9) at the second end of the outer casing.

7. The penetration device according to any of the preceding claims, **characterised in that** the inward bent edges and/or the structural element have arranged at the edge of the first end and the second end by covering at least 50 % length of the outer perimeter of the end, preferably the inward bent edges and/or the structural element have arranged to the whole length of the outer perimeter of the end.

8. The penetration device according to any of the preceding claims, **characterised in that** the structural element arranged to the second end of the outer casing is a cover plate (7) having an opening.

9. The penetration device according to any of the preceding claims, **characterised in that** the device further comprises a gasket (10) between the cover plate (7) and the fixing flange (9).

10. The penetration device according to any of the preceding claims, **characterised in that** the heat resistant flexible material layers (3, 3') have colour that differentiate from the colour of the intumescent material (2, 2').

11. The penetration device according to any of the preceding claims, **characterised in that** the housing has formed from two or more interconnected parts.

12. The penetration device according to any of the preceding claims, **characterised in that** the outer diameter of the heat resistant flexible material layers (3, 3') is greater than the outer diameter of the intumescent material sheet(s) (2, 2') and/or greater than the inner diameter of the outer casing (5).

## Patentansprüche

1. Penetrationsvorrichtung (1) für Kabel, Draht/Drähte oder Rohr(e), die durch eine Öffnung verlaufen, die an einer Wand, einer Decke oder einem Boden angeordnet ist, **dadurch gekennzeichnet, dass** die Penetrationsvorrichtung (1) Folgendes umfasst:
- einen Einsatz, der ein intumeszierendes Material (2, 2') und wärmebeständige flexible Materialschichten (3, 3') aufweist, wobei das intumeszierende Material zwischen den hitzebeständigen flexiblen Materialschichten angeordnet ist, wobei der Einsatz mindestens eine durchdringende Öffnung (4) für ein Kabel, einen Draht oder ein Rohrumfasst, die durch die Breitenrichtung des Einsatzes gestreckt ist, und
- ein Gehäuse, das ein den Einsatz umgebendes Außengehäuse (5) aufweist, wobei das Außengehäuse (5) zumindest teilweise perforiert ist, und das Außengehäuse (5) ein erstes Ende und ein zweites Ende in Längsrichtung des Gehäuses aufweist, wobei das erste Ende und das zweite Ende nach innen gebogene Kanten (6) und/oder ein Strukturelement (7, 10) aufweisen, um einen Bereich der Öffnung des ersten Endes und des zweiten Endes kleiner zu machen.

2. Penetrationsvorrichtung nach Anspruch 1, **dadurch gekennzeichnet, dass** das intumeszierende Material (2, 2') und die hitzebeständigen flexiblen Materialschichten (3, 3') im Wesentlichen senkrecht zur Längsrichtung des Kabels/der Kabel, des Drahts/der Drähte oder des Rohrs/der Rohre angeordnet sind.

3. Penetrationsvorrichtung nach Anspruch 1 oder 2, **dadurch gekennzeichnet, dass** das Außengehäuse (5) Öffnungen (8, 8') im Wesentlichen über den gesamten Umfang des Außengehäuses aufweist.

4. Penetrationsvorrichtung nach einem der vorhergehenden Ansprüche, **dadurch gekennzeichnet, dass** das intumeszierende Material (2, 2 ') in Form einer Folie ist.

5. Penetrationsvorrichtung nach einem der vorhergehenden Ansprüche, **dadurch gekennzeichnet, dass** die hitzebeständigen flexiblen Materialschichten (3, 3 ') aus dem Silikon oder Silikongummi gebildet sind.

6. Penetrationsvorrichtung nach einem der vorhergehenden Ansprüche, **dadurch gekennzeichnet, dass** das Gehäuse einen Befestigungsflansch (9) am zweiten Ende des Außengehäuses aufweist.

7. Penetrationsvorrichtung nach einem der vorhergehenden Ansprüche,**dadurch gekennzeichnet, dass** die nach innen gebogenen Kanten und/oder das Strukturelement am Rand des ersten Endes und am zweiten Ende angeordnet sind, indem mindestens 50% der Länge des Außenumfangs des Endes abgedeckt wird, vorzugsweise die nach innen gebogenen Kanten und/oder das Strukturelement über die gesamte Länge des Außenumfangs des Endes angeordnet sind.

8. Penetrationsvorrichtung nach einem der vorhergehenden Ansprüche, **dadurch gekennzeichnet, dass** das am zweiten Ende des Außengehäuses angeordnete Strukturelement eine Abdeckplatte (7) mit einer Öffnung ist.

9. Penetrationsvorrichtung nach einem der vorhergehenden Ansprüche, **dadurch gekennzeichnet, dass** die Vorrichtung ferner eine Dichtung (10) zwischen der Abdeckplatte (7) und dem Befestigungsflansch (9) aufweist.

10. Penetrationsvorrichtung nach einem der vorhergehenden Ansprüche, **dadurch gekennzeichnet, dass** die hitzebeständigen flexiblen Materialschichten (3, 3 ') eine Farbe aufweisen, die sich von der Farbe des intumeszierenden Materials (2, 2') unterscheidet.

11. Penetrationsvorrichtung nach einem der vorhergehenden Ansprüche, **dadurch gekennzeichnet, dass** das Gehäuse aus zwei oder mehr miteinander verbundenen Teilen gebildet ist.

12. Penetrationsvorrichtung nach einem der vorhergehenden Ansprüche, **dadurch gekennzeichnet, dass** der Außendurchmesser der hitzebeständigen flexiblen Materialschichten (3, 3') größer als der Außendurchmesser der intumeszierenden Materialfolie(n) (2, 2') und/oder größer als der Innendurchmesser des Außengehäuses (5) ist.

## Revendications

1. Dispositif de pénétration (1) pour un ou plusieurs câbles, un ou plusieurs fils ou un ou plusieurs tuyaux traversant une ouverture agencée dans un mur, un plafond ou un sol, **caractérisé en ce que** le dispositif de pénétration (1) comprend
- un insert, qui comprend un matériau intumescent (2, 2') et des couches de matériau flexible résistant à la chaleur (3, 3'), dans lequel le matériau intumescent est disposé entre les couches de matériau flexible résistant à la chaleur, l'insert comprend au moins une ouverture pénétrante (4) pour un câble, un fil ou un tuyau allongé dans le sens de la largeur de l'insert, et
- un boîtier, qui comprend un boîtier externe (5) entourant l'insert, lequel boîtier externe (5) est au moins partiellement perforé, et le boîtier externe (5) comprend une première extrémité et une seconde extrémité dans le sens de la longueur du boîtier, lesquelles première extrémité et seconde extrémité comprennent des bords courbés vers l'intérieur (6) et/ou un élément structurel (7, 10) pour rendre plus petite une zone de l'ouverture de la première extrémité et de la seconde extrémité.

2. Dispositif de pénétration selon la revendication 1, **caractérisé en ce que** le matériau intumescent (2, 2') et les couches de matériau flexible résistant à la chaleur (3, 3') sont disposés sensiblement perpendiculairement par rapport à la direction de longueur du ou des câbles, du ou des fils ou du ou des tuyaux.

3. Dispositif de pénétration selon la revendication 1 ou 2, **caractérisé en ce que** le boîtier externe (5) comprend des ouvertures (8, 8') sensiblement sur toute la circonférence du boîtier externe.

4. Dispositif de pénétration selon l'une quelconque des revendications précédentes, **caractérisé en ce que** le matériau intumescent (2, 2') est sous la forme d'une feuille.

5. Dispositif de pénétration selon l'une quelconque des revendications précédentes, **caractérisé en ce que** les couches de matériau flexible résistant à la chaleur (3, 3') se sont formées à partir de silicone ou de caoutchouc de silicone.

6. Dispositif de pénétration selon l'une quelconque des revendications précédentes, **caractérisé en ce que** le boîtier comprend une bride de fixation (9) au niveau de la deuxième extrémité du boîtier externe.

7. Dispositif de pénétration selon l'une quelconque des revendications précédentes, **caractérisé en ce que** les bords courbés vers l'intérieur et/ou l'élément structurel sont disposés au bord de la première extrémité et de la seconde extrémité en couvrant au moins 50 % de la longueur du périmètre externe de l'extrémité, de préférence les bords courbés vers l'intérieur et/ou l'élément structurel sont disposés sur toute la longueur du périmètre externe de l'extrémité.

8. Dispositif de pénétration selon l'une quelconque des revendications précédentes, **caractérisé en ce que** l'élément structurel disposé au niveau de la seconde extrémité du boîtier externe est une plaque de couverture (7) ayant une ouverture.

9. Dispositif de pénétration selon l'une quelconque des revendications précédentes, **caractérisé en ce que** le dispositif comprend en outre un joint (10) entre la plaque de couverture (7) et la bride de fixation (9).

10. Dispositif de pénétration selon l'une quelconque des revendications précédentes, **caractérisé en ce que** les couches de matériau flexible résistant à la chaleur (3, 3') ont une couleur qui se différencie de la couleur du matériau intumescent (2, 2').

11. Dispositif de pénétration selon l'une quelconque des revendications précédentes, **caractérisé en ce que** le boîtier est formé de deux ou plusieurs parties interconnectées.

12. Dispositif de pénétration selon l'une quelconque des revendications précédentes, **caractérisé en ce que** le diamètre externe des couches de matériau flexible résistant à la chaleur (3, 3') est supérieur au diamètre externe de la ou des feuilles de matériau intumescent (2, 2') et/ou supérieur au diamètre intérieur du boîtier externe (5).
